**Europäisches Patentamt**

**European Patent Office**

**Office européen des brevets**

(19)

(11) Veröffentlichungsnummer : **0 108 407 B1**

(12) # EUROPÄISCHE PATENTSCHRIFT

(45) Veröffentlichungstag der Patentschrift :
04.03.87

(21) Anmeldenummer : 83111051.5

(22) Anmeldetag : 05.11.83

(51) Int. Cl.⁴ : **B 66 B   1/46**, H 02 B   1/06

(54) Anzeige- und Bedientableau für Aufzugkabinen.

(30) Priorität : 09.11.82 DE 3241407

(43) Veröffentlichungstag der Anmeldung :
16.05.84 Patentblatt 84/20

(45) Bekanntmachung des Hinweises auf die Patenterteilung : 04.03.87 Patentblatt 87/10

(84) Benannte Vertragsstaaten :
AT BE CH FR GB IT LI LU NL SE

(56) Entgegenhaltungen :
FR-A- 2 150 225
FR-A- 2 340 268
FR-A- 2 413 809
US-A- 3 987 928
Firmendruckschrift von Ing. Wolfgang Schäfer Elektrotechnik + Maschinenbau, 74B1 Laiz, Akte Seiten 45-57

(73) Patentinhaber : Schäfer, Wolfgang
Goethestrasse 7
D-7480 Sigmaringen-Laiz (DE)

(72) Erfinder : Schäfer, Wolfgang
Goethestrasse 7
D-7480 Sigmaringen-Laiz (DE)

(74) Vertreter : Rüger, Rudolf, Dr.-Ing.
Patentanwälte Dr.-Ing. R. Rüger Dipl.-Ing. H.P. Barthelt Webergasse 3 Postfach 348
D-7300 Esslingen/Neckar (DE)

## Beschreibung

Die Erfindung betrifft ein Anzeige- und Bedientableau gemäß dem Oberbegriff des Anspruchs 1.

Derartige Tableaus, wie sie allgemein bekannt sind, dienen dazu, die Verdrahtung der zur Steuerung der Aufzugkabine notwendigen Schalter, Taster, Anzeigeelemente u. dgl. sowie diese Elemente selbst bis auf ihre Betätigungsorgane abzudecken. Dabei muß das Bedientableau als Abdeckung zweierlei Funktionen erfüllen : Das Tableau soll ein ansprechendes Erscheinungsbild haben, damit es sich harmonisch in die Umgebung einpaßt, und es muß hinreichend robust sein, um seine Schutzfunktion auch dann zu erfüllen, wenn mutwillige Manipulationen an ihm vorgenommen werden. Insbesondere darf es sich durch einfache Hilfsmittel, wie zweckentfremdete Schlüssel u. dgl., nicht so weit beschädigen lassen, daß seine Schutzfunktion verlorengeht.

Das bekannte Anzeige- und Bedientableau besteht deshalb aus einer stabilen Metall-, vorzugsweise einer eloxierten Aluminiumplatte, in die im festen Rasterabstand quadratische Öffnungen für die Knöpfe der Taster eingearbeitet sind. Weitere anders gestaltete Öffnungen, die aus dem Rasterabstand herausfallen, enthalten Knebel von Schaltern oder die Zylinder von Schlüsselschaltern. Für die Lautsprecher und Mikrofone sind schließlich Schlitzgruppen in das Tableau eingearbeitet.

Damit die Taster und Schalter ohne zu klemmen betätigbar sind, müssen die zugehörigen Öffnungen in dem Anzeige- und Bedientableau mit großer Genauigkeit gefertigt werden, da der Spalt zwischen den Betätigungsorganen und der Berandung der Öffnung nur verhältnismäßig sehr klein sein darf, sonst könnten zwischen Tasterknopf und Öffnung irgendwelche Gegenstände eingeklemmt werden. Kleine Spalte zwischen den Tasterknöpfen und den Rändern der Öffnungen müssen auch deshalb mit großer Genauigkeit hergestellt werden, damit der ästhetische Eindruck nicht gestört wird.

Weiter erschwerend kommt noch hinzu, daß jedes Anzeige- und Bedientableau praktisch ein Unikat darstellt, denn für jeden Aufzug wird entsprechend der anzufahrenden Anzahl von Stockwerken und Steuerungsmöglichkeiten, wie öffentlicher oder priviligierter Zugang u. dgl., ein entsprechend vorgearbeitetes Anzeige- und Bedientableau benötigt, um die oben genannten Forderungen erfüllen zu können. Die Folge davon sind verhältnismäßig hohe Fertigungskosten, da eine Massenfertigung ausgeschlossen ist, und auch entsprechende Lieferzeiten. Selbst, wenn für bestimmte Gruppen von Aufzügen gleiche Anzeige- und Bedientableaus verwendet werden können, wobei bestimmte Öffnungen durch Blindstopfen verschlossen sind, können immer noch keine günstigen Fertigungskosten erzielt werden, ganz abgesehen von dem Problem, daß dann enorme Lagerhaltungskosten wegen der verbleibenden großen Vielfalt anfallen.

Aus der FR-A-2 150 225 ist eine aus Einzelelementen bestehende Abdeckung für Frontplatten oder Anzeigetableaus bekannt. Die Einzelelemente weisen eine rechteckige Grundfläche und an der Rückseite angeformte Haken auf, mit denen sie in entsprechende Öffnungen in der Frontplatte einrastbar sind. Allerdings ist der Rand der einzelnen Abdeckungen völlig ungeschützt, weshalb diese Ausführungsform nicht hinreichend sicher gegen Vandalismus ist. Bereits mit Schlüsseln oder sonstigen länglichen Gegenständen könnte der Rand des Abdeckelementes hintergriffen und die Abdeckung von der Frontplatte abgesprengt werden. Insoweit eignet sich diese Anordnung nicht zur Anwendung in öffentlich zugänglichen Aufzügen.

Grundsätzlich Ähnliches gilt für die Steckdosenabdeckplatte nach der US-A-3 987 928. Bei dieser Abdeckung ist ebenfalls deren Rand frei zugänglich. Abgesehen davon ist die bekannte Steckdosenabdeckung individuell an die jeweils abzudeckende Steckdose angepaßt, d. h. sie enthält Öffnungen, die in Form und Anzahl den Steckanschlüssen in der Dose angepaßt sind.

Ausgehend hiervon ist es Aufgabe der Erfindung, ein weitgehend zerstörungssicheres und dennoch ästhetisch ansprechendes Anzeige- und Bedientableau für Aufzugkabinen zu schaffen, das sich ohne Sonderanfertigung vorzugsweise durch den Monteur vor Ort mittels einfacher handbetätigter Werkzeug an die jeweiligen Installationsanforderungen anpassen läßt.

Diese Aufgabe wird erfindungsgemäß durch das Anzeige- und Bedientableau mit den Merkmalen des Anspruches 1 gelöst.

Durch die Verwendung einer Trägerplatte mit darauf angeordneten Abdeckelementen kann die Trägerplatte selbst ohne weiteres als Meterware hergestellt werden, die nur noch entsprechend der Zahl der Bedien- und Anzeigeelemente abgelängt werden muß. Die Verwendung rechteckiger Öffnungen für die Anzeige- und Bedienelemente hat dabei den Vorteil, daß die Öffnungen bereits für alle Bedien- und Anzeigeelemente passen, die das einfache Rastermaß aufweisen. Falls Anzeige- und Bedienelemente eingebaut werden sollen, die das einfache Rastermaß überschreiten, beispielsweise Schlüsselschalter, Lautsprecher, Mikrofone u. dgl. kann der zwei benachbarte rechteckige Öffnungen voneinander trennende Steg mit Hilfe eines einfachen Werkzeugs, beispielsweise einer Biberzange oder eines Knabber ohne weiteres herausgetrennt werden.

Obwohl die solchermaßen vorgelochte Trägerplatte mit den schmalen Trennstegen zwischen den rechteckigen Öffnungen ausgesprochen filigran ist, zeigt das fertige Anzeige- und Bedientableau, bestehend aus der Trägerplatte und den darauf angeordneten Abdeckplatten, eine außerordentliche Festigkeit. Insbesondere bieten auch die Abdeckplatten keine seitliche Angriffsfläche zum Ansetzen von Werkzeugen, da sie entweder unmittelbar aneinander angrenzen oder, soweit ihr Rand freiliegen würde, durch Leisten geschützt sind, die an den Längskanten der Trägerplatte angeordnet sind.

Um zu verhindern, daß beispielsweise die Knöpfe von Drucktastern an den Öffnungen in den Abdeckplatten streifen, weisen die Abdeckplatten vorteilhafterweise Zentrier- und Führungseinrichtungen zum Zentrieren der Bedien- und Anzeigeelemente auf.

Wenn das Gebäude, in dem der zu bestückende Aufzug installiert ist, eine sehr große Geschoßanzahl aufweist, ist es zweckmäßig, wenn die Trägerplatte wenigstens zwei Spalten von rechteckigen Öffnungen aufweist, die durch einen in Längsrichtung der Grundplatte verlaufenden Längssteg voneinander getrennt sind, weil sich auf diese Weise bei gleicher Anzahl von Öffnungen für die Anzeige- und Bedienelemente die Länge der Trägerplatte verkürzt.

Um einen genügenden seitlichen Abstand benachbarter Anzeige- und Bedienelemente sicherzustellen und um die Festigkeit in Längsrichtung zu erhöhen, ist es zweckmäßig, wenn die Breite des die beiden Spalten trennenden Längssteges größer ist als die des zwei benachbarte Öffnungen trennenden Quersteges.

Eine einfache Befestigung der Abdeckplatten, die von den Anzeige- und Bedienelementen unabhängig ist, ergibt sich, wenn zu beiden Seiten einer jeden rechteckigen Öffnung für die Anzeige- und Bedienelemente Befestigungsöffnungen für eine der jeweiligen Öffnung zugeordnete Abdeckplatte vorgesehen sind. Dabei ist es günstig, wenn die einander entsprechenden Befestigungsöffnungen, die benachbarten rechteckigen Öffnungen zugeordnet sind, den gleichen Rasterabstand voneinander aufweisen wie die rechteckigen Öffnungen.

Um eine entsprechend flexible Befestigung der Trägerplatte an der Aufzugkabine sicherzustellen, sind neben jeder der beiden in Längsrichtung verlaufenden Leisten der Trägerplatte Befestigungsöffnungen vorgesehen, die in Längsrichtung voneinander im Rasterabstand entfernt sind.

Eine leichtgewichtige Trägerplatte ausreichender Festigkeit wird erhalten, wenn sie aus einem Aluminiumprofil hergestellt ist.

Eine von außen nicht sichtbare Befestigung der Abdeckplatten wird erhalten, wenn an die Abdeckplatten in die zugehörigen Befestigungsöffnungen einführbare Befestigungsfortsätze angeformt sind. Hierbei lassen sich die Abdeckplatten nach der vollständigen Montage der Trägerplatte in der Aufzugkabine besonders einfach und sicher an der Trägerplatte haltern, wenn die Befestigungsfortsätze Hinterschneidungen aufweisen, mit denen sie in die zugehörigen Befestigungsöffnungen einrastbar sind.

Um einen rückwärtigen Schutz der Anzeige- und Bedienelemente zu ermöglichen oder um die Anzeige- oder Bedienelemente unabhängig von der Trägerplatte haltern zu können, so daß ihre elektrische Verkabelung nach Abnehmen der Trägerplatte leicht zugänglich ist, ist zweckmäßigerweise der Trägerplatte ein die Anzeige- und Bedienelemente aufnehmender Kasten zugeordnet, der im Rasterabstand voneinander entfernte Befestigungseinrichtungen für die Bedien- und Anzeigeelemente aufweist.

In der Zeichnung sind Ausführungsbeispiele des Gegenstandes der Erfindung dargestellt. Es zeigen:

Figur 1 ein in einer Aufzugkabine zu befestigendes Anzeige- und Bedientableau gemäß der Erfindung mit teilweise entfernten Abdeckplatten sowie teilweise abgeschnittener Trägerplatte in einer Draufsicht,

Figur 2 das Anzeige- und Bedientableau nach Fig. 1, geschnitten entlang der Linie II-II in einer Seitenansicht,

Figur 3 ein Anzeige- und Bedientableau gemäß der Erfindung mit zweispaltiger Anordnung der Bedienelemente und teilweise entfernten Abdeckplatten sowie teilweise abgeschnittener Trägerplatte in einer Draufsicht und

Figur 4 das Anzeige- und Bedientableau nach Fig. 3, geschnitten entlang der Linie IV-IV nach Fig. 3 in einer Seitenansicht.

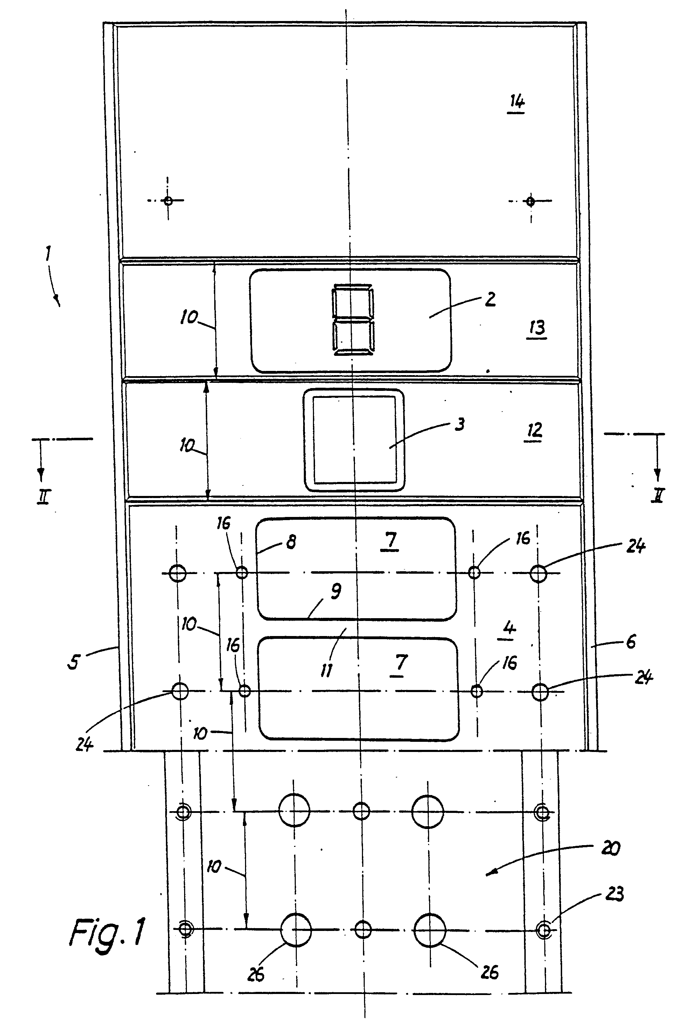

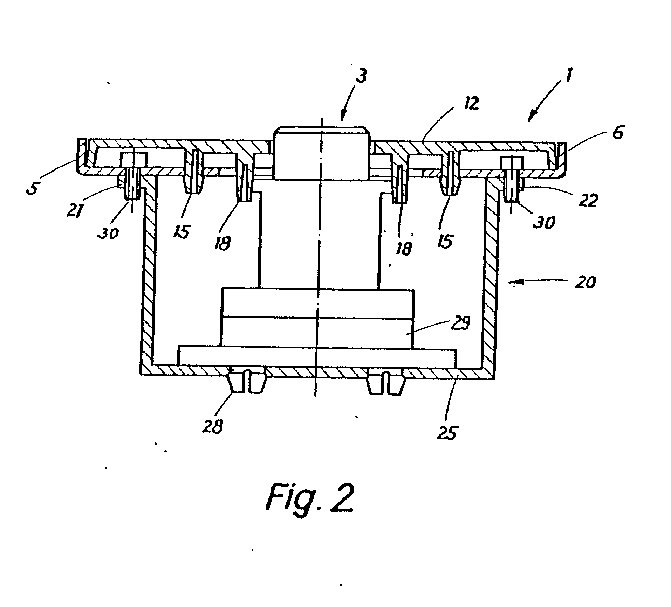

In Fig. 1 ist ein Anzeige- und Bedientableau 1 für Aufzugkabinen veranschaulicht, das über eine Öffnung in der im übrigen nicht veranschaulichten Seiten- bzw. Rückwand der Aufzugkabine anzuordnen ist und der Aufnahme einzelner Anzeige- und Bedienungselemente 2, 3 dient. Das Anzeige- und Bedientableau 1 enthält eine beispielsweise aus Aluminium gefertigte rechteckige Trägerplatte 4, an deren Längskanten zwei Leisten 5, 6 angeformt sind, die, wie Fig. 2 zeigt, rechtwinklig abgebogen sind und in Richtung auf das Innere der Augzugkabine zu weisen, so daß sich eine etwa C-förmige Querschnittsgestalt der Trägerplatte 4 ergibt.

Die Trägerplatte 4 enthält über ihre gesamte Länge vertikal übereinander angeordnete rechteckige Öffnungen 7 mit einer Schmal- und einer Längsseite 8, 9. Die rechteckigen Öffnungen 7 weisen untereinander einen gleichen Rasterabstand 10 auf und sind so angeordnet, daß die Schmalseite 8 parallel zu den Leisten 5 und 6 verläuft, während die wenigstens doppelt so lange Längsseite 9 rechtwinklig zu den Leisten 5, 6 sich erstreckt. Jeweils zwei einander benachbarte rechteckige Öffnungen 7 sind durch einen schmalen heraustrennbaren Quersteg 11 voneinander getrennt. Insgesamt ergibt sich damit eine spaltenförmige Anordnung quer übereinanderliegender rechteckiger Öffnungen 7, die sich mittig zwischen den Leisten 5 und 6 befinden.

Auf der bis auf die Leisten 5, 6 ebenen Trägerplatte 4 sind den Anzeige- und Bedienelementen 2, 3 zugeordnete Abdeckplatten 12 und 13 sowie je eine endseitige Abdeckplatte 14 angeordnet, die in ihrer Gesamtheit bei der fertig montierten Trägerplatte 4 diese bis auf die Leisten 5 und 6 vollständig überdecken und Öffnungen oder Fenster für die Anzeige- und Bedienelemente 2, 3 enthalten. Dabei ist bei dem in Fig. 1 gezeigten Ausführungsbeispiel die Breite der Abdeckplatten 12, 13, 14 gleich dem Abstand zwischen den Leisten 5 und 6, während die in Längsrichtung der Grundplatte 4 gemessene Höhe der Abdeckplatten 12, 13 und 14 ein ganzzeiliges Vielfaches des Rasterabstandes 10 beträgt.

Die Befestigung der Abdeckplatten 12, 13 und 14 erfolgt mittels jeweils paarweise vorgesehener Zapfen 15, die an der Rückseite der beispielsweise aus Kunststoff gespritzten Abdeckplatten 12, 13, 14 angeformt sind. Die Zapfen 15 stecken im montierten Zustand in entsprechenden Befestigungsöffnungen 16 der Trägerplatte 4, die jeweils neben den Schmalseiten 8 der rechteckigen Öffnungen 7 angeordnet sind. Der Abstand der Befestigungsöffnungen 16 von einander benachbarter rechteckiger Öffnungen 7 ist wiederum gleich dem Rasterabstand 10, so daß zu jeder rechteckigen Öffnung 7 zwei im vorliegenden Fall mittig zur Höhe der rechteckigen Öffnungen 7 angeordnete Befestigungsöffnungen 16 gehören.

Damit die Zapfen 15 zuverlässig in den zugehörigen runden Befestigungsöffnungen 16 festgehalten sind, weisen sie geeignete Hinterschneidungen auf, mit denen sie im eingesetzten Zustand an der Rückseite der Trägerplatte 4 festrasten, wozu jeder Zapfen 15 an seinem freien Ende kegelstumpfförmig ausgebildet ist und im Bereich der so entstehenden Verdickung zum Zwecke eines leichteren Einführens in die Befestigungsöffnungen 16 in bekannter Weise längsgeschlitzt ist.

Um zu verhindern, daß die Betätigungsglieder der Bedienelemente 3 an der Lochberandung der zugehörigen Abdeckplatte 12 streifen, können an den Abdeckplatten 12, 13, 14 zusätzliche Zentrierungs- und Führungsmittel in Gestalt weiterer zylindrischer Zapfen 18 angeformt sein, die bei aufgesetzter Abdeckplatte 12, 13, 14 durch die jeweilige rechteckige Öffnung 7 in der Trägerplatte 4 hindurchführen und in entsprechende, an dem Bedienelement 3 ausgebildete, in der Zeichnung nicht weiter dargestellte Führungselemente eingreifen und so das Bedienelement 3 bezüglich der zugehörigen Abdeckplatte 12 oder 13 in die richtige Lage bringen.

Unter bzw. hinter der Trägerplatte befindet sich ein mit dieser verschraubter Kasten 20 aus einem rechtwinklig abgewinkelten Aluminiumprofil mit U-förmiger Querschnittsgestalt. An den freien Enden des im Querschnitt U-förmigen Profils sind nach außen weisende Flansche 21, 22 angeformt, die im Rasterabstand 10 voneinander entfernte Gewindebohrungen 23 enthalten. Diese Gewindebohrungen 23 fluchten mit entsprechenden, ebenfalls im Rasterabstand 10 angebrachten Löchern 24 in der Trägerplatte, die jeweils spaltenförmig neben den Leisten 5 und 6 vorgesehen sind. Im montierten Zustand führen durch einige dieser Löcher 24 entsprechende Schrauben, die in die Gewindebohrungen 23 des Kastens 20 eingedreht sind und die Trägerplatte 4 fest mit dem Kasten 20 verbinden.

Der Kasten 20 enthält in seinem Boden 25 Paare kreisförmiger Rastöffnungen 26, die jeweils wiederum im Rasterabstand 10 voneinander entfernt sind und über den gesamten Boden 25 verteilt vorhanden sind.

Endseitig ist der Kasten 20 beispielsweise mittels mit dem Boden 25 verschraubter Winkel (nicht gezeigt) abgeschlossen, die wiederum an der Seiten- bzw. Rückwand der Aufzugkabine befestigt sind und den Kasten 20 in der Öffnung der Seiten- bzw. Rückwand der Aufzugkabine haltern.

In den Rastöffnungen 26 stecken ,mit entsprechenden Rastnasen 28 versehene Sockel 29, die der Halterung und dem elektrischen Anschluß der Anzeige- und Bedienelemente 2, 3 dienen. Die Sockel 29 fluchten hierzu mit den darüber befindlichen rechteckigen Öffnungen 7 in der Trägerplatte 4 derart, daß die in die zugehörigen Sockel 29 eingesteckten Anzeige- und Bedienelemente 2, 3 ebenfalls mit den rechteckigen Öffnungen 7 fluchten und mit ihren Betätigungsgliedern bzw. Anzeigen durch die rechteckigen Öffnungen 7 und die Abdeckplatten 12, 13 hindurchreichen bzw. hindurch sichtbar sind.

Bei der Montage des Anzeige- und Bedientableaus 1 wird zunächst in der vorgesehenen Öffnung in der Seitenwand der Aufzugkabine der mit entsprechenden Sockeln bestückte Kasten 20 mittels stirn- oder endseitig angebrachter Winkel befestigt, der zuvor von einer entsprechenden Meterware abgelängt ist, die das zuvor beschriebene U-förmige Profil aufweist und, wie in Fig. 1 veranschaulicht, durchgehend gelocht ist.

Nach der Verdrahtung der Sockel 29 werden nunmehr die erforderlichen Anzeige- und Bedienelemente 2, 3 in die zugehörigen Sockel eingesteckt. Falls hierbei Anzeige- oder Bedienelemente 2, 3 zum Einsatz kommen, deren in Längsrichtung der Trägerplatte 4 gemessene Höhe das einfache Rastermaß übersteigt und die folglich in der Trägerplatte 4 einen größeren Durchbruch erfordern als er einer einfachen rechteckigen Öffnung 7 entspricht, kann an der entsprechenden Stelle der Trägerplatte 4 der Durchbruch durch Entfernen des Quersteges 11 vergrößert werden, der sich ohne weiteres vor Ort mittels eines Blechknabbers heraustrennen läßt.

Nachdem so die standardmäßig vorgefertigte Trägerplatte 4, die bspw. von einer entsprechend gelochten und abgekanteten Meterware aus Aluminium heruntergeschnitten ist und durch Heraustrennen der Querstege 11 an die jeweilige Anzeige- und Bedienelementekonfiguration angepaßt ist, wird sie mittels durch die Befestigungsöffnungen 24 führender Schrauben 30, die in die Flansche 21, 22 des Kastens 20 eingedreht sind, auf dem Kasten 20 befestigt und deckt die in der Seitenwand der Aufzugskabine vorhandene Öffnung vollständig ab. Die in dem Kasten befindlichen und in dem Zugehörigen Sockel 29 steckenden Anzeige- und Bedienelemente fluchten mit den zugehörigen rechteckigen Öffnungen 7, d. h. der Betätigungsknopf des Bedienelementes 3 ragt durch die zugehörige rechteckige Öffnung 7 hindurch, wie dies aus Fig. 2 ersichtlich ist, während die Ziffernanzeige des Anzeigeelementes 2 durch die rechteckige Öffnung 7 vollständig sichtbar ist. Größere Anzeige- und Bedienelemente 2, 3 ragen dabei durch zwei oder mehrere durch Heraustrennen des Quersteges 11 miteinander verbundene rechteckige Öffnungen 7.

Nachdem die Montage insoweit erfolgt ist, werden in die Trägerplatte 4 die erforderlichen Abdeckplatten 12, 13 und 14 mit ihren Zapfen 15 in die Befestigungsöffnungen 16 eingerastet, wobei eine jede Abdeckplatte 12, 13, 14 eine an das jeweilige Anzeige- oder Bedienelement 2, 3 angepaßte Öffnung oder Fenster enthält, durch das das Betätigungsglied des Bedienungselementes 3 hindurchragt oder bspw. die Ziffernanzeige sichtbar ist. Dabei werden von Anzeige- und Bedienelementen 2, 3 freie Teile der Trägerplatte 4, hinter denen sich in dem Kasten 20 bspw. von außen nicht zugängliche Elektronikteile befinden, durch Abdeckplatten 14 überdeckt, die keine Öffnungen oder Fenster enthalten. Für größere Anzeige- und Bedienelemente 2, 3, die das Rastermaß 10 überschreiten, sind entsprechend höhere, nicht veranschaulichte Abdeckplatten vorgesehen.

Auf diese Weise entsteht nach der vollständigen Montage ein Anzeige- und Bedientableau 1, dessen Trägerplatte 4 bis auf die Leisten 5, 6 durch die Abdeckplatten 12, 13, 14 vollständig abgedeckt ist.

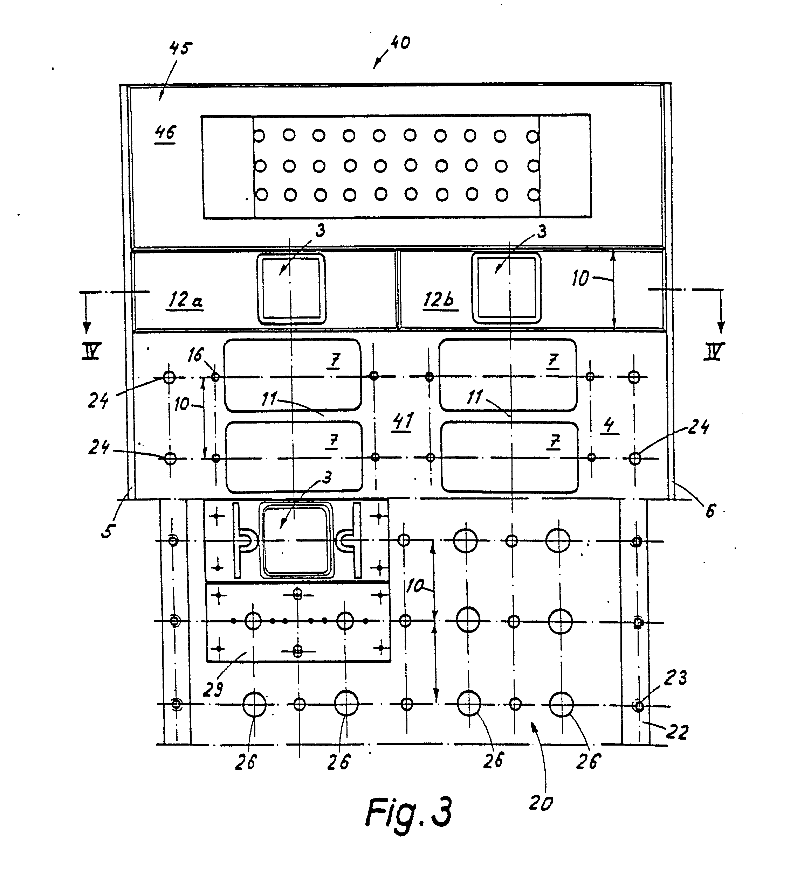

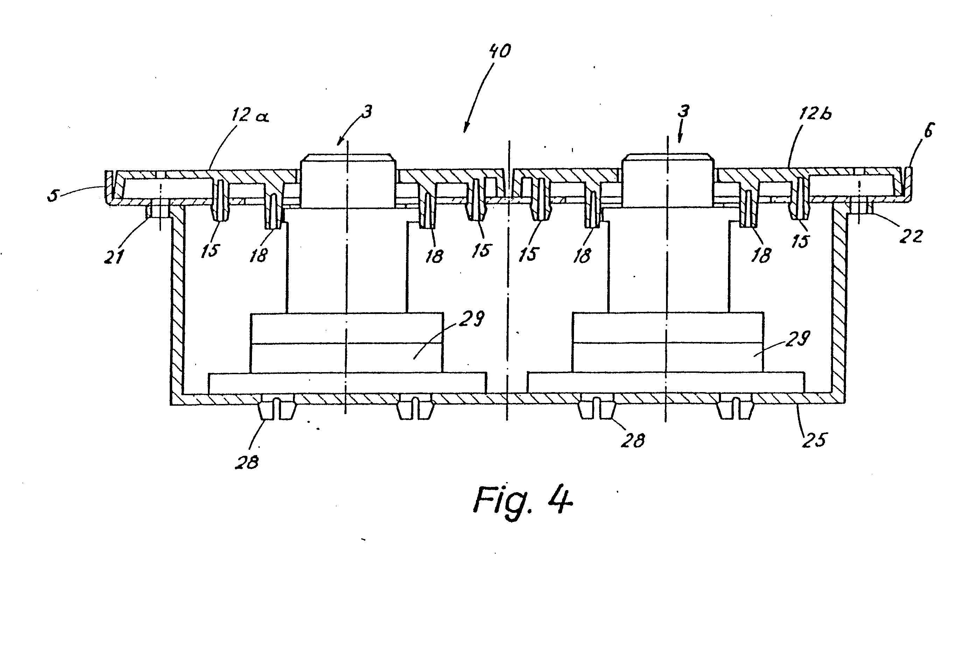

In den Fig. 3 und 4 ist ein weiteres Ausführungsbeispiel eines Anzeige- und Bedientableaus 40 veranschaulicht, bei dem gleiche Teile wie bei dem Ausführungsbeispiel nach den Fig. 1 und 2 mit denselben Bezugszeichen versehen und nicht erneut beschrieben sind.

Abweichend von dem vorhergehenden Ausführungsbeispiel, enthält die Trägerplatte 4 rechteckige Öffnungen 7, die durchgehend zweispaltig im Rasterabstand 10 übereinander bzw. in Längsrichtung angeordnet sind, wobei die beiden Spalten rechteckiger Öffnungen 7 durch einen Längssteg 41 voneinander getrennt sind. Die Breite des Längssteges 41 ist größer als die Breite der Querstege 11, die die rechteckförmigen Öffnungen 7 voneinander trennen.

Zu beiden Seiten der rechteckförmigen Öffnungen 7 befinden sich wiederum Befestigungsöffnungen 16 für die Abdeckplatten, und außerdem sind in der Trägerplatte 4 neben den beiden angeformten Leisten 5 und 6 zwei Spalten von Befestigungsöffnungen 24 vorgesehen, mit denen die Trägerplatte 4 auf dem zugehörigen Kasten 20, der eine entsprechend größere Breite aufweist, befestigt ist.

Passend zu der Trägerplatte 4 ist die Breite des Kastens 20 ausgewählt, der entsprechend der zweispaltigen Anordnung der rechteckigen Öffnungen 7 auch eine zweispaltige Anordnung der Befestigungseinrichtungen 26 zum Einrasten der Sockel 29 enthält.

Die Montage des Anzeige- und Bedientableaus 40 erfolgt wie vorher beschrieben, wobei bei der Verwendung von Anzeige- oder Bedienelementen 2, 3, die das einfache Rastermaß 10 überschreiten und eine Erstreckung in vertikaler Richtung aufweisen, die ein ganzzahliges Vielfaches des Rastermaßes 10 ist, bspw. Schlüsselschalter oder dergl., wie vorbeschrieben die Querstege 11 entfernt werden und so auf einfache Weise eine größere Öffnung in der Trägerplatte 4 erhalten wird.

Darüber hinaus besteht bei dem Anzeige- und Bedientableau 40 nach den Fig. 3 und 4 auch die Möglichkeit, im Bereich seitlich nebeneinander angeordneter rechteckiger Öffnungen 7 den Längssteg 41 herauszutrennen, um auf diese Weise eine Öffnung zu erhalten, die sich fast über die gesamte Breite der Trägerplatte 4 erstreckt und den Einbau entsprechend breiter Anzeige- und Bedienelemente 2, 3 ermöglicht, ohne daß eine Sonderanfertigung der Trägerplatte erforderlich ist. Eine derartige Anordnung ist bei 45 in Fig. 3 veranschaulicht, wo hinter einer Abdeckplatte 46 eine Wechselsprechanlage eingebaut ist, die in vertikaler Richtung das doppelte Rastermaß 10 in Anspruch nimmt und sich über die Breite der beiden Spalten rechteckförmiger Öffnungen 7 erstreckt. Hierzu werden bei der Montage die Querstege 11 sowie der Längssteg 41 zwischen vier in den beiden Spalten einander benachbarter rechteckförmiger Öffnungen herausgetrennt, und es wird somit eine Öffnung erhalten, die in vertikaler Richtung dem Doppelten der Schmalseite 8 entspricht, während sie in waagerechter Richtung dem Doppelten der Längskante 9 zuzüglich der Breite des Längssteges 41 entspricht.

Die bei dem Anzeige- und Bedienungstableau 40 zur Verwendung kommenden Abdeckplatten 12a, 12b bzw. 46 sind an die Breite der Trägerplatte 4 angepaßt in der Weise, daß Abdeckplatten 46 zur Verfügung stehen, die sich über die volle Breite erstrecken, wie dies für die Abdeckplatte 46 der Fall ist, und Abdeckplatten vorhanden sind, die sich lediglich über die halbe Breite der Trägerplatte 4 erstrecken, wie dies für die Abdeckplatten 12a und 12b gilt. Die Höhe der Abdeckplatten 12a, 12b und 46 ist aber wiederum jeweils ein ganzzahliges Vielfaches des Rastermaßes, wobei die in den Abdeckplatten gegebenenfalls vorhandenen Durchbrüche, Fensterlochungen und dergl. mit den jeweils dahinter befindlichen Öffnungen in der Trägerplatte 4 fluchten, die je nach Platzanforderung des verwendeten Anzeige- und Bedienelementes entweder der einfachen rechteckigen Öffnung 7 entsprechen oder durch Heraustrennen der Querstege 11 bzw. Abschnitten des Längssteges 41 mit den dadurch entstandenen größeren Öffnungen fluchten.

Das beschriebene Anzeige- und Bedientableau 1 kann auch zur Außensteuerung verwendet werden und sitzt dann über einer entsprechenden Öffnung im Mauerwerk der Türzarge od. dgl.

**Patentansprüche**

1. Anzeige- und Bedientableau (1) für Aufzugkabinen, mit einer eine Öffnung in der Seiten- bzw. Rückwand der Aufzugkabine überdeckenden rechteckigen Platte, die Öffnungen für durch diese hindurchreichende, zumindest zum Teil in einem gleichen Rasterabstand angeordnete Bedien- und Anzeigeelemente (2, 3) enthält, wobei die Öffnungen in wenigstens einer Spalte übereinander angeordnet sind, dadurch gekennzeichnet, daß die Platte (4) als Trägerplatte für darauf befestigte, den Bedien- und Anzeigeelementen (2, 3) zugeordnete Abdeckplatten (12, 12a, 12b, 13, 14, 46) ausgebildet ist, die in ihrer Gesamtheit die Trägerplatte (4) bis auf an ihren Längskanten angeordnete Leisten (5, 6) vollständig überdecken, daß die in wenigstens einer Spalte übereinander in der Trägerplatte (4) angeordneten Öffnungen (7) für die Bedien- und Anzeigeelemente (2, 3) rechteckig ausgebildet sind und alle voneinander jeweils gleichen Rasterabstand (10) aufweisen sowie durch schmale, mittels einfacher handbetätigter Werkzeuge entfernbarer, rechtwinklig zu den Längskanten verlaufender Querstege (11) getrennt sind, daß die in Längsrichtung der Trägerplatte (4) gemessene Erstreckung einer jeden Abdeckplatte (12, 12a, 12b, 13, 14, 46) ein ganzzahliges Vielfaches des Rasterabstandes (10) ist und daß die Abdeckplatten (12, 12a, 12b, 13, 14, 46) Zentrier- und Führungseinrichtungen (18) zum Zentrieren der Bedien- und Anzeigeelemente (2, 3) aufweisen.

2. Anzeige- und Bedientableau nach Anspruch 1, dadurch gekennzeichnet, daß die Trägerplatte (4) wenigstens zwei Spalten von rechteckigen Öffnungen (7) aufweist, die durch einen in Längsrichtung der Trägerplatte (4) verlaufenden Längssteg (41) voneinander getrennt sind.

3. Anzeige- und Bedientableau nach Anspruch 2, dadurch gekennzeichnet, daß die Breite des die beiden Spalten trennenden Längssteges (41) größer als die des zwei benachbarte Öffnungen (7) trennenden Quersteges (11) ist.

4. Anzeige- und Bedientableau nach Anspruch 1, dadurch gekennzeichnet, daß zu beiden Seiten einer jeden rechteckigen Öffnung (7) Befestigungsöffnungen (16) für eine der Öffnung (7) zugeordnete Abdeckplatte (12, 12a, 12b, 13, 14, 46) angeordnet sind.

5. Anzeige- und Bedientableau nach Anspruch 4, dadurch gekennzeichnet, daß die einander entsprechenden Befestigungsöffnungen (16), die benachbarten rechteckigen Öffnungen (7) zugeordnet sind, den gleichen Rasterabstand (10) voneinander aufweisen wie die rechteckigen Öffnungen (7).

6. Anzeige- und Bedientableau nach Anspruch 1, dadurch gekennzeichnet, daß neben jeder der beiden in Längsrichtung verlaufenden Leisten (5, 6) der Trägerplatte (4) Befestigungsöffnungen (24) vorgesehen sind, die in Längsrichtung voneinander im Rasterabstand (10) entfernt sind.

7. Anzeige- und Bedientableau nach Anspruch 1, dadurch gekennzeichnet, daß die Trägerplatte (4) aus einem Aluminiumprofil besteht.

8. Anzeige- und Bedientableau nach Anspruch 4, dadurch gekennzeichnet, daß an den Abdeckplatten (12, 12a, 12b, 13, 14, 46) in die zugehörigen Befestigungsöffnungen (16) einführbare Befestigungsfortsätze (15) angeformt sind.

9. Anzeige- und Bedientableau nach Anspruch 8, dadurch gekennzeichnet, daß die Befestigungsfortsätze (15) Hinterschneidungen aufweisen, mit denen sie in die zugehörigen Befestigungsöffnungen (16) einrastbar sind.

10. Anzeige- und Bedientableau nach Anspruch 1, dadurch gekennzeichnet, daß die Zentrier- und Führungseinrichtungen an die Rückseite der Abdeckplatten (12, 12a, 12b, 13, 14, 46) angeformte zylindrische Zapfen (18) sind.

11. Anzeige- und Bedientableau nach Anspruch 1, dadurch gekennzeichnet, daß der Trägerplatte (4) ein die Bedien- und Anzeigeelemente (2, 3) aufnehmender Kasten (20) zugeordnet ist, der im Rasterabstand (10) von einander entfernte Befestigungseinrichtungen (26, 28, 29) für die Bedien- und Anzeigeelemente (2, 3) aufweist.

**Claims**

1. Indicator and operating panel (1) for lift cabins, having a rectangular plate covering over an opening in the side or rear wall of the lift cabin, which plate contains openings for operating and indicator elements (2, 3) which reach through it and are arranged at least in part at an equal pattern interval, the openings being arranged one above the other in at least one column, characterised in that the plate (4) is formed as carrier plate for cover plates (12, 12a, 12b, 13, 14, 46) secured thereon and allocated to the operating and indicator elements (2, 3), which cover plates in their entirety completely cover over the carrier plate (4) except for strips (5, 6) arranged on its longitudinal edges, in that the openings (7) arranged in at least one column one above the other in the carrier plate (4) for the operating and indicator elements (2, 3) are of rectangular formation and all have the same pattern interval (10) from one another in each case, and are separated by narrow transverse webs (11) extending at right angles to the longitudinal edges and removable by means of simple manually actuated tools, in that the extent of each cover plate (12, 12a, 12b, 13, 14, 46) measured in the longitudinal direction of the carrier plate (4) is an integral multiple of the pattern interval (10) and in that the cover plates (12, 12a, 12b, 13, 14, 46) comprise centring and guide devices (18) for the centring of the operating and indicator elements (2, 3).

2. Indicator and operating panel according to claim 1, characterised in that the carrier plate (4) comprises at least two columns of rectangular openings (7) which are separated from one another by a longitudinal web (41) extending in the longitudinal direction of the carrier plate (4).

3. Indicator and operating panel according to claim 2, characterised in that the width of the longitudinal web (41) separating the two columns is greater than that of the transverse web (11) separating two adjacent openings (7).

4. Indicator and operating panel according to claim 1, characterised in that to both sides of each rectangular opening (7) there are arranged securing openings (16) for a cover plate (12, 12a, 12b, 13, 14, 46) allocated to the opening (7).

5. Indicator and operating panel according to claim 4, characterised in that the mutually corresponding securing openings (16), which are allocated to adjacent rectangular openings (7), have the same pattern interval (10) from one another as the rectangular openings (7).

6. Indicator and operating panel according to claim 1, characterised in that beside each of the two strips (5, 6), extending in the longitudinal direction, of the carrier plate (4) there are provided securing openings (24) which are distanced from one another in the longitudinal direction at the pattern interval (10).

7. Indicator and operating panel according to claim 1, characterised in that the carrier plate (4) consists of an aluminium section.

8. Indicator and operating panel according to claim 4, characterised in that securing extension pieces (15) which can be introduced into the pertinent securing openings (16) are formed on the cover plates (12, 12a, 12b, 13, 14, 46).

9. Indicator and operating panel according to claim 8, characterised in that the securing extension pieces (15) comprise undercuttings with which they can be snapped into the pertinent securing openings (16).

10. Indicator and operating panel according to claim 1, characterised in that the centring and guide devices are cylindrical pegs (18) formed on to the backs of the cover plates (12, 12a, 12b, 13, 14, 46).

11. Indicator and operating panel according to claim 1, characterised in that to the carrier plate (4) there is allocated a box (20) receiving the operating and indicator elements (2, 3), which box comprises securing devices (26, 28, 29), spaced from one another at the pattern interval (10), for the operating and indicator elements (2, 3).

## Revendications

1. Tableau d'affichage et de commande (1) pour des cabines d'ascenseur, comprenant une plaque rectangulaire recouvrant une ouverture dans la paroi latérale ou arrière de la cabine d'ascenseur et contenant des ouvertures pour des éléments de commande et d'affichage (2, 3) traversant lesdites ouvertures et disposées en partie au moins suivant un même intervalle ou pas de trame, les ouvertures étant disposées les unes au-dessus des autres suivant au moins une colonne, caractérisé par le fait que la plaque (4) est réalisée sous forme de plaque-support pour des caches (12, 12a, 12b, 13, 14, 46) fixés sur ladite plaque, associés aux éléments de commande et d'affichage (2, 3) et recouvrant dans leur ensemble complètement la plaque-support (4), excepté à l'endroit de rebords (5, 6) disposés sur les côtés longitudinaux de la plaque-support, que les ouvertures (7) pour les éléments de commande et d'affichage (2, 3) disposées suivant au moins une colonne les unes au-dessus des autres dans la plaque-support (4), sont réalisées avec une forme rectangulaire, présentent toutes le même intervalle de trame (10) les unes par rapport aux autres et sont séparées par des barrettes transversales (11) étroites, s'étendant à angle droit par rapport aux bords longitudinaux et susceptibles d'être enlevées à l'aide de simples outils à main, que la dimension de chaque cache (12, 12a, 12b, 13, 14, 46), mesurée suivant la direction longitudinale de la plaque-support (4), est un multiple entier de l'intervalle de trame (10) et que les caches (12, 12a, 12b, 13, 14, 46) présentent des dispositifs de centrage et de guidage (18) pour le centrage des éléments de commande et d'affichage (2, 3).

2. Tableau d'affichage et de commande suivant la revendication 1, caractérisé par le fait que la plaque-support (4) comporte au moins deux colonnes d'ouvertures rectangulaires (7) séparées par une barrette longitudinale (41) s'étendant dans la direction longitudinale de la plaque-support (4).

3. Tableau d'affichage et de commande suivant la revendication 2, caractérisé par le fait que la largeur de la barrette longitudinale (41) séparant les deux colonnes est supérieure à celle de la barrette transversale (11) séparant deux ouvertures voisines (7).

4. Tableau d'affichage et de commande suivant la revendication 1, caractérisé par le fait que de part et d'autre de chaque ouverture rectangulaire (7) sont disposées des ouvertures de fixation (16) pour un cache (12, 12a, 12b, 13, 14, 46) associé à l'ouverture (7).

5. Tableau d'affichage et de commande suivant la revendication 4, caractérisé par le fait que les ouvertures de fixation (16) correspondantes, associées à des ouvertures rectangulaires (7) voisines, présentent entre elles le même intervalle de trame (10) que les ouvertures rectangulaires (7).

6. Tableau d'affichage et de commande suivant la revendication 1, caractérisé par le fait qu'à côté de chacun des deux rebords (5, 6) de la plaque-support (4), s'étendant dans la direction longitudinale, sont prévues des ouvertures de fixation (24) séparées les unes des autres dans la direction longitudinale par l'intervalle de trame (10).

7. Tableau d'affichage et de commande suivant la revendication 1, caractérisé par le fait que la plaque-support (4) est constituée par un profilé d'aluminium.

8. Tableau d'affichage et de commande suivant la revendication 4, caractérisé par le fait que des saillies de fixation (16) susceptibles d'être introduites dans les ouvertures de fixation correspondantes (16) sont formées sur les caches (12, 12a, 12b, 13, 14, 46).

9. Tableau d'affichage et de commande suivant la revendication 8, caractérisé par le fait que les saillies de fixation (15) présentent des têtes susceptibles d'être encliquetées dans les ouvertures de fixation correspondantes (16).

10. Tableau d'affichage et de commande suivant la revendication 1, caractérisé par le fait que les dispositifs de centrage et de guidage sont constitués par des tétons cylindriques (18) formés sur le côté arrière des caches (12, 12a, 12b, 13, 14, 46).

11. Tableau d'affichage et de commande suivant la revendication 1, caractérisé par le fait qu'à la plaque-support (4) est associé un boîtier (20) recevant les éléments de commande et d'affichage (2, 3) et présentant des dispositifs de fixation (26, 28, 29) espacés les uns des autres de l'intervalle de trame (10), pour les éléments de commande et d'affichage (2, 3).

Fig.1

Fig. 2

0 108 407

Fig.3

Fig. 4